# EUROPÄISCHE PATENTSCHRIFT

(11) **EP 2 709 895 B1**
(45) Veröffentlichungstag und Bekanntmachung des Hinweises auf die Patenterteilung: **16.11.2016**
(21) Anmeldenummer: 12721260.3
(22) Anmeldetag: 10.05.2012
(51) Int. Cl.: B61L 7/06, B61L 11/08, H02K 35/02

(54) **ENERGIEWANDLER, FUNKTASTER MIT EINEM ENERGIEWANDLER SOWIE ANORDNUNG ZUM STELLEN ZUMINDEST EINER ELEKTRISCH ORTSGESTELLTEN WEICHE EINES SCHIENENGEBUNDENEN VERKEHRSWEGES MIT ZUMINDEST EINEM FUNKTASTER**
ENERGY CONVERTER, WIRELESS SWITCH HAVING AN ENERGY CONVERTER AND ARRANGEMENT FOR SETTING AT LEAST ONE ELECTRICALLY DECENTRALIZED POINT OF A RAILBOUND TRAFFIC ROUTE WITH AT LEAST ONE WIRELESS SWITCH
CONVERTISSEUR D'ÉNERGIE, ACTIONNEUR RADIO DOTÉ D'UN CONVERTISSEUR D'ÉNERGIE ET DISPOSITIF DESTINÉ À RÉGLER AU MOINS UN AIGUILLAGE À RÉGLAGE LOCAL ÉLECTRIQUE D'UNE VOIE FERRÉE DOTÉ D'AU MOINS UN ACTIONNEUR RADIO

(30) Priorität: 20.05.2011 DE 102011076191
(43) Veröffentlichungstag der Anmeldung: 26.03.2014
(73) Patentinhaber: Siemens Aktiengesellschaft, 80333 München (DE)
(72) Erfinder: TEMMING, Rudolf, 38154 Königslutter (DE)
(86) Internationale Anmeldenummer: PCT/EP2012/058632
(87) Internationale Veröffentlichungsnummer: WO 2012/159889

(56) Entgegenhaltungen:
- WO-A1-02/095908
- WO-A1-2004/093300
- WO-A2-2008/149400
- WO-A2-2010/124075
- DE-A1- 19 818 580
- DE-A1-102006 013 653
- DE-A1-102007 001 478
- DE-U1- 29 713 334

## Beschreibung

Die Erfindung betrifft einen Energiewandler
- mit zumindest einer Anordnung zur Umwandlung mechanischer in elektrische Energie, die eine elektrische Spule, einen in Bezug auf die Spule ortsfest gehaltenen ersten Permanentmagneten und einen relativ zur Spule beweglichen zweiten Permanentmagneten aufweist, bei der eine durch Bewegen des zweiten Permanentmagneten bewirkte Änderung des magnetischen Flusses einen elektrischen Strom in der Spule induziert und bei der der erste Permanentmagnet den zweiten Permanentmagneten durch magnetische Haltekräfte in einer Ruheposition hält, und
- mit einem Betätigungselement, das mit dem zweiten Permanentmagneten wirkverbunden ist.

Aus der Druckschrift WO 2004/093300 A1 ist ein gattungsgemäßer Energiewandler bekannt, der mit einer Funkelektronik zum Aussenden einer Schaltinformation zu einer baulich miniaturisierten, kompakten Einheit zusammengefasst ist, wobei die Einheit beispielsweise zum Bedienen einer mit einer Funksteuerung versehenen Kraftfahrzeugverriegelungsanlage dient.

Wesentlich für den dort beschriebenen Energiewandler - der in seinem Durchmesser in jedem Fall kleiner als 1,5 cm ausgeführt sein soll - ist das Induzieren elektrischer Energie durch schlagartige Änderung des magnetischen Flusses beim Öffnen und Schließen eines magnetischen Kreises. Die durch die Relativbewegung zwischen der elektrischen Spule und dem beweglichen Permanentmagneten induzierte elektrische Energie dient lediglich als zusätzliche Energie. Dem entsprechend sind die beiden Permanentmagnete als konzentrische Ringe ausgebildet, von denen einer mit einer aus weichmagnetischem Material bestehenden, ortsfesten Bodenplatte und der andere mit einer aus weichmagnetischem Material bestehenden, federartig umschnappbaren Kuppel verbunden ist. Durch das Umschnappen der Kuppel aus einer ersten in eine zweite Ruhelage wird der aus den konzentrischen Ringen, der Bodenplatte und der Kuppel gebildete magnetische Kreis, der zuvor durch einen Luftspalt geöffnet war, geschlossen. Beim Zurückschnappen der Kuppel wird der magnetische Kreis unter Bildung des Luftspaltes wieder geöffnet. In einer der beiden Ruhelagen der umschnappbaren Kuppel, in der der magnetische Kreis geschlossen ist, hält der ortsfeste Permanentmagnet den beweglichen Permanentmagneten mittelbar über die Bodenplatte oder die Kuppel durch magnetische Haltekräfte in seiner Ruheposition. Die Kontaktflächen, die zum Schließen des magnetischen Kreises dienen, bilden also zugleich Halteflächen, zwischen denen die magnetischen Haltekräfte in der Ruheposition wirken, so dass die Haltekräfte entsprechend gering sind.

Ein weiterer gattungsgemäßer Energiewandler, bei dem die beiden Permanentmagnete sich in Richtung der Bewegungsbahn des beweglichen zweiten Permanentmagneten erstreckende, einander gegenüberstehende Halteflächen aufweisen, zwischen denen die magnetischen Haltekräfte wirken, ist aus der Druckschrift DE 198 18 580 A1 bekannt. Dabei sind die eine elektrische Spule und eine weitere elektrische Spule, die hintereinander geschaltet sind, auf Schenkeln eines U-förmigen Joches geschoben. Wirkt auf das Betätigungselement eine Kraft, die groß genug ist, die Haltekräfte zu überwinden, so wird der zweite Permanentmagnet in eine Lücke des U-förmigen Jochs geschoben. Dabei werden die Magnetlinien des zweiten Permanentmagneten in dem Joch gesammelt. Der zweite Permanentmagnet wird durch das Magnetfeld, das er in dem Joch aufbaut, angezogen und bewegt sich beschleunigt in Richtung der Spulen in eine Endposition.

Ausgehend von einem Energiewandler mit den Merkmalen des Oberbegriffes des Patentanspruches 1 (DE 198 18 580 A1) liegt der Erfindung die Aufgabe zu Grunde, eine kräftige "schlagartige" Betätigung des Betätigungselementes zur Überwindung der Haltekraft zu ermöglichen, so dass der Energiewandler ohne Zerstörungsgefahr durch auf das Betätigungselement einwirkende kurze kräftige Schläge sicher betätigt werden kann.

Gelöst wird diese Aufgabe durch einen Energiewandler mit den Merkmalen des Patentanspruches 1, bei dem ein Gehäuse eine erste Einlage aufweist, die mit Trennwänden versehen ist und die zwei in Schichten übereinander angeordnete Ringkammern und einen ersten Abschnitt einer konzentrisch zu den Ringkammern angeordeten zentralen Aufnahmekammer bildet, wobei der ortsfeste erste Permanetmagnet in der oberen der beiden Ringkammern, die elektrische Spule in der darunter liegenden der Ringkammern und der mit dem Betätigungselement wirkverbundene bewegliche zweite Permanentnagnet in der zentralen Aufnahmekammer angeordnet ist, und wobei der zweite Permanentmagnet bei Betätigung des Betätigungselementes durch die Wicklung der Spule hindurch bewegbar ist.

Ein wesentlicher Vorteil der Erfindung besteht darin, dass die Größe der Haltekräfte - insbesondere durch Ausgestaltung des ortsfesten Permanentmagneten - vorgegeben werden kann. Eine Veränderung der Größe der Haltekräfte durch Austausch der ortsfesten Permanentmagnete hat dabei im Wesentlichen keinen Einfluss auf die Menge der elektrischen Energie, die bei der Betätigung gewonnen wird, da die Funktion der Energieumwandlung von der Funktion der Haltekrafterzeugung im Wesentlichen entkoppelt ist. Bei Freigabe des Betätigungselementes zieht der ortsfest gehaltene erste Permanentmagnet den beweglichen Permanentmagneten in seine Ruheposition zurück. Auch dabei wird mechanische Energie in elektrische Energie umgewandelt.

Als vorteilhaft wird es angesehen, wenn der ortsfest gehaltene erste Permanentmagnet und die elektrische Spule in Richtung der Bewegungsbahn des beweglichen zweiten Permanentmagneten in unterschiedlichen Ebenen hintereinander angeordnet sind.

Weiterhin wird es als vorteilhaft angesehen, wenn der ortsfest gehaltene erste Permanentmagnet aus zwei Teilstücken besteht, die in der Ruheposition in Bezug auf den beweglichen zweiten Permanentmagneten einander diametral gegenüberliegend angeordnet sind.

Bei einer bevorzugten Ausführungsform des erfindungsgemäßen Energiewandlers ist vorgesehen, dass zumindest zwei der Anordnungen zur Umwandlung mechanischer in elektrische Energie derart angeordnet sind, dass die Bewegungsbahnen ihrer beweglichen zweiten Permanentmagnete fluchtend hintereinander verlaufen und dass die beweglichen zweiten Permanentmagnete der zumindest zwei Anordnungen zur Umwandlung mechanischer in elektrische Energie zu ihrer gemeinsamen Betätigung mit dem Betätigungselement wirkverbunden sind. Dies gestattet es, die Haltekräfte zu vergrößern und dabei trotzdem durch einen kurzen Schlag überwindbar zu gestalten. Vorzugsweise ist dabei vorgesehen, dass das Gehäuse eine zweite Einlage aufweist, wobei die ortsfesten ersten Permanentmagnete und die elektrischen Spulen der beiden Anordnungen alternierend in den Ringkammern und die mit dem Betätigungselement wirkverbundenen beweglichen zweiten Permanentmagnete in der zentralen Aufnahmekammer angeordnet sind. Dabei kann die zentrale Aufnahmekammer mit Vorteil Führungsflächen für die beweglichen zweiten Permanentmagnete und/oder das Betätigungselement bilden. Bevorzugt ist der erfindungsgemäße Energiewandler Teil eines Funktasters, bei dem die Spulen elektrische Energiequellen für zumindest einen mit dem Energiewandler baulich verbundenen Funksender bilden, wobei der Funksender zur Bedienung zumindest eines funkgesteuerten Gerätes, insbesondere einer elektrisch ortsgestellten Weiche eines schienengebundenen Verkehrsweges, zum Aussenden eines Betätigungssignals geeignet ausgebildet ist.

Dabei wird es als vorteilhaft angesehen, wenn der Funksender zur Bedienung mehrerer funkgesteuerter Geräte zum Aussenden codierter Funksignale geeignet ausgebildet ist, wobei die Codierung der Funksignale mittels einer Codiereinrichtung erfolgt. So kann beispielsweise das Betätigungselement die Codiereinrichtung bilden, wobei über verschiedene Drehstellungen des Betätigungselementes verschiedene Codes einstellbar sind.

Dadurch, dass der erfindungsgemäße Energiewandler eine kräftige "schlagartige" Betätigung seines Betätigungselementes zulässt, kann ein mit dem erfindungsgemäßen Energiewandler versehener Funktaster in vorteilhafter Weise als "Schlagtaster" bei einer Anordnung zum Stellen zumindest einer elektrisch ortsgestellten Weiche eines schienengebundenen Verkehrsweges eingesetzt werden. Der Schlagtaster ist dazu an einem sich außerhalb des Lichtraumprofils des schienengebundenen Verkehrsweges befindlichen Mast und/oder in oder an einem sich der Weiche nähernden Schienenfahrzeug angeordnet, wobei das Betätigungselement eine Schlagtaste ist.

Der Funktaster ist also bevorzugt Teil einer Anordnung zum Stellen zumindest einer Weiche eines schienengebundenen Verkehrsweges, wobei der Funktaster als Schlagtaster (auch bekannt als "Großhandtaster") an einem sich außerhalb des Lichtraumprofils des schienengebundenen Verkehrsweges befindlichen Mast und/oder in einem sich der Weiche nähernden Schienenfahrzeug angeordnet ist, und wobei das Betätigungselement eine Schlagtaste ("Großhandtaste") ist.

Elektrisch ortsgestellte Weichen, Schlagtaster zum Umstellen elektrisch ortsgestellter Weichen sowie Verfahren zum Umstellen elektrisch ortsgestellter Weichen mittels Schlagtastern sind beispielsweise aus den Druckschriften DE 297 13 334 U1, DE 10 2007 001 478 A1, DE 10 2007 003 630 A1 und DE 10 2007 003 637 A1 bekannt, so dass an dieser Stelle insbesondere hinsichtlich der Begriffe "elektrisch ortsgestellte Weiche" und "Schlagtaster" ausdrücklich auf diese Druckschriften Bezug genommen wird.

Die Erfindung wird nachfolgend anhand von Ausführungsbeispielen näher erläutert, dabei zeigen:
Figur 1 eine Anordnung zum Stellen von Weichen eines schienengebundenen Verkehrsweges mit Funktastern,
Figur 2 ein erstes Ausführungsbeispiel der in Figur 1 gezeigten Funktaster und
Figur 3 ein zweites Ausführungsbeispiel der in Figur 1 gezeigten Funktaster.

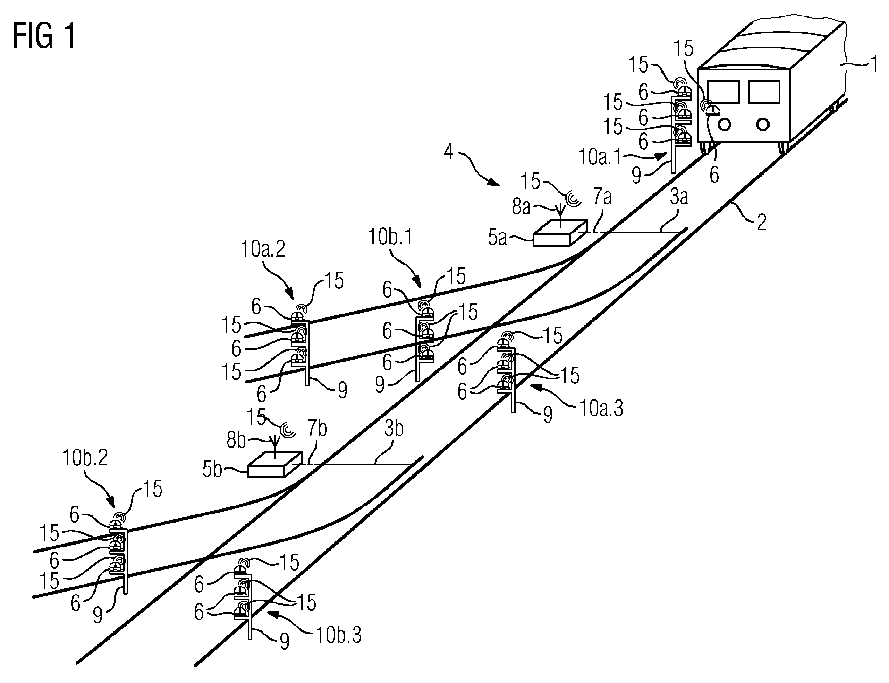

Die Figur 1 zeigt in einer schematischen Darstellung einen von einem Schienenfahrzeug 1 befahrenen Abschnitt (Gleisabschnitt) eines schienengebundenen Verkehrsweges 2 mit elektrisch ortsgestellten Weichen (EOW's) 3a, 3b und einer Anordnung 4 zum Stellen der Weichen 3a, 3b.

Die Anordnung 4 zum Stellen der Weichen 3a, 3b weist den Weichen 3a, 3b zugeordnete funkgesteuerte Weichensteuerungen 5a, 5b und energieautarke Funktaster 6 zur Bedienung der funkgesteuerten Weichensteuerungen 5a, 5b auf.

Jede der Weichensteuerungen 5a, 5b steuert das Stellen der ihr zugeordneten der Weichen 3a, 3b. Hierzu sind die Weichensteuerungen 5a, 5b über hier jeweils schematisch als eine gestrichelte Linie dargestellte drahtgebundene oder drahtlose Verbindungen 7a, 7b mit der jeweiligen Weiche 3a, 3b verbunden. Die Weichensteuerungen weisen drahtlose Schnittstellen 8a, 8b zum Empfang eines Weichenstellbefehls auf. Jede der Weichensteuerungen ist so ausgebildet, dass sie in Reaktion auf einen aktiven Weichenstellbefehl über die Verbindungen 7a, 7b an die ihr jeweils zugeordnete Weiche 3a, 3b ein Stellsignal übermittelt, das das Stellen der Weiche auslöst.

Die Funktaster 6 zur Bedienung der funkgesteuerten Weichensteuerungen 5a, 5b sind an Masten 9 vorgezogener Bedienstellen 10a.1, 10a.2, 10a.3, 10b.1, 10b.2, 10b.3 - die sich außerhalb des Lichtraumprofils des schienengebundenen Verkehrsweges 2 befinden - und/oder in oder an dem sich der Weiche nähernden Schienenfahrzeug 1 angeordnet. Dabei sind die Bedienstellen 10a.1, 10a.2, 10a.3 der Weichensteuerung 5a und die Bedienstellen 10b.1, 10b.2, 10b.3 der Weichensteuerung 5b zugeordnet.

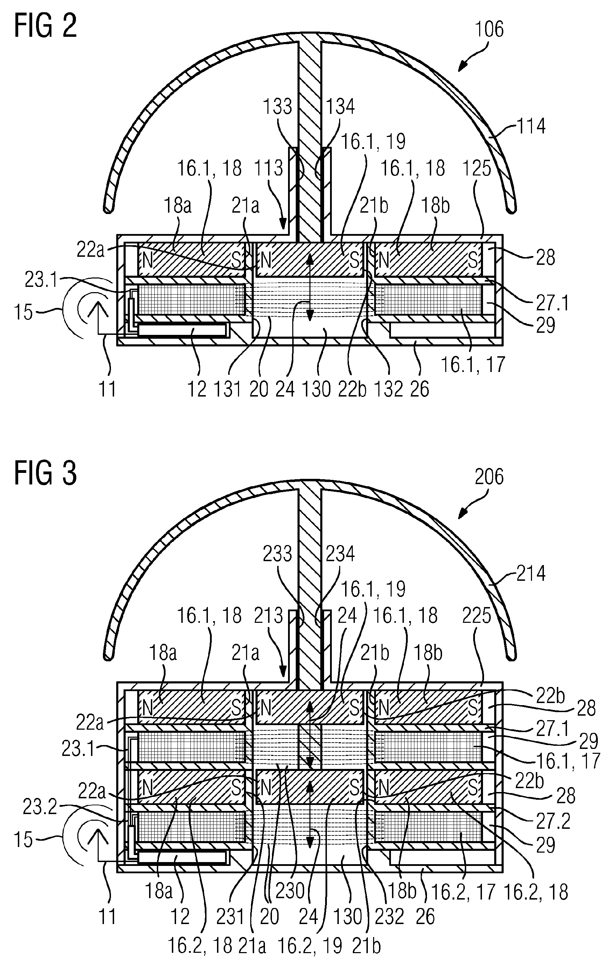

Die Figuren 2 und 3 zeigen zwei Ausführungsbeispiele 106 und 206 der in der Figur 1 mit dem Bezugszeichen 6 schematisch dargestellten energieautarken Funktaster.

Beide Ausführungsbeispiele 106; 206 der Funktaster sind als energieautarke Schlagtaster ausgebildet. Sie weisen jeweils einen mit einer drahtlosen Schnittstelle 11 versehenen Funksender 12 und einen Energiewandler 113; 213 zur dezentralen, batterielosen Energieversorgung des Funksenders 12 auf. Dabei ist ein Betätigungselement 114; 214 des Energiewandlers 113; 213 als Schlagtaste ausgebildet, so dass es - ähnlich Not-Aus-Schaltern oder "Buzzern" bei Quizshows - jeweils durch einen kurzen kräftigen Schlag von Hand betätigt werden kann.

Bei der Betätigung des Betätigungselementes 114; 214 sendet der Funksender 12 über die drahtlose Schnittstelle 11 als Funksignal einen Weichenstellbefehl aus. Außerdem wandelt der Energiewandler 113; 213 bei der Betätigung des Betätigungselementes 114; 214 mechanische Energie in elektrische Energie um, mittels derer der Funksender 12 versorgt wird.

Die Übertragung der von den Funktastern bei ihrer Betätigung ausgesendeten Funksignale (Weichenstellbefehle) an die drahtlosen Schnittstellen 8a, 8b der Weichensteuerungen 5a, 5b erfolgt über ein Funknetz 15.

Die Energiewandler 113; 213 umfassen jeweils eine erste Anordnung 16.1 zur Umwandlung mechanischer in elektrische Energie. Die Anordnung 16.1 besteht aus einer elektrischen Spule 17, einem in Bezug auf die Spule 17 ortsfest gehaltenen ersten Permanentmagneten 18, der aus zwei Teilen 18a und 18b besteht, und einem relativ zur Spule 17 beweglichen zweiten Permanentmagneten 19.

Die beiden Teile 18a, 18b des ortsfest gehaltenen ersten Permanentmagneten halten den zweiten Permanentmagneten 19 durch magnetische Haltekräfte in der gezeigten Ruheposition.

Das Betätigungselement 114; 214 ist mit dem zweiten Permanentmagneten 19 - hier mechanisch fest - wirkverbunden. Bei der Betätigung des Betätigungselementes 114; 214 wird der zweite Permanentmagnet 19 entgegen der magnetischen Haltekräfte aus seiner hier gezeigten Ruheposition heraus innen durch die in den Figuren 2 und 3 mit gestrichelter Linie angedeutete Wicklung 20 der Spule 17 hindurch bewegt. Eine durch diese Bewegung des zweiten Permanentmagneten 19 bewirkte Änderung des magnetischen Flusses induziert einen elektrischen Strom in der Spule 17.

Die beiden Teile 18a und 18b des ortsfest gehaltenen ersten Permanentmagneten weisen Halteflächen 21a, 21b auf, die Halteflächen 22a, 22b des beweglichen zweiten Permanentmagneten 19 gegenüber stehen. Die Halteflächen 21a, 21b und 22a, 22b, zwischen denen die magnetischen Haltekräfte wirken, erstrecken sich dabei in Richtung der Bewegungsbahn 24 des beweglichen zweiten Permanentmagneten 19.

Die Haltekräfte werden durch die Magnetstärke der Permanentmagnete 18, 19 definiert. Bei "kräftiger" Betätigung werden die Haltekräfte überschritten und der an dem als Schlagtaste ausgebildeten Betätigungselement 114; 214 mechanisch befestigte bewegliche zweite Permanentmagnet 19 bewegt sich innen durch die Wicklung 20 der Spule 17, wobei die eingeleitete mechanische Energie in elektrische Energie umgewandelt wird. Bei Freigabe des Betätigungselementes 114; 214 zieht der ortsfest gehaltene erste Permanentmagnet 18 den beweglichen Permanentmagneten 19 in seine in den Figuren 2 bzw. 3 gezeigte Ruhestellung zurück. Auch dabei wird mechanische Energie in elektrische Energie umgewandelt.

Der ortsfest gehaltenen erste Permanentmagnet 18 und die elektrische Spule 17 sind in Richtung der Bewegungsbahn 24 des beweglichen zweiten Permanentmagneten 19 in unterschiedlichen Ebenen hintereinander angeordnet.

Die beiden Teilestücke 18a und 18b des ortsfest gehaltenen ersten Permanentmagneten liegen in Bezug auf den beweglichen zweiten Permanentmagneten 19 einander diametral gegenüber.

Der Energiewandler 113; 213 weist ein aus einer Außenschale 125; 225, einem Deckel 26 und einer ersten Einlage 27.1 gebildetes Gehäuse auf, das zugleich zur Aufnahme des Funksenders 12 dient. Dabei bildet die erste Einlage 27.1, die mit Trennwänden versehen ist, in Schichten übereinander angeordnete Ringkammern 28 und 29 und einen ersten Abschnitt einer konzentrisch zur den Ringkammern 28, 29 angeordneten zentralen Aufnahmekammer 130; 230. Der Querschnitt der Aufnahmekammer 130; 230 ist bevorzugt quadratisch, kann aber auch eine andere Form - beispielswiese die eines Kreises - aufweisen. Entsprechend verlaufen die Ringkammern 28, 29 im Quadrat oder im Kreis um die Aufnahmekammer 130; 230.

Die beiden Teilstücke 18a, 18b des ortsfesten ersten Permanentmagneten sind in der oberen 28 der beiden Ringkammern und die elektrische Spule 17 in der darunter liegenden 29 der Ringkammern angeordnet. Der mit dem Betätigungselement 114; 214 fest verbundene bewegliche zweite Permanentmagnet 19 ist in der zentralen Aufnahmekammer 130; 230 angeordnet.

Die zentrale Aufnahmekammer 130; 230 bildet erste Führungsflächen 131, 132; 231, 232 für den beweglichen zweiten Permanentmagneten 19 und zweite Führungsflächen 133, 134; 233, 234 für das Betätigungselement 114; 214.

Im Unterschied zu der in der Figur 2 gezeigten ersten Ausführungsform 113 des Energiewandlers umfasst die in der Figur 3 gezeigte zweite Ausführungsform 213 des Energiewandlers zusätzlich eine zweite Anordnung 16.2 zur Umwandlung mechanischer in elektrische Energie.

Die beiden Anordnungen 16.1 und 16.2 sind dabei derart übereinander angeordnet, dass die Bewegungsbahnen 24 ihrer beweglichen zweiten Permanentmagnete 19 fluchtend hintereinander verlaufen, wobei die beweglichen zweiten Permanentmagnete 19 beider Anordnungen 16.1 und 16.2 zur ihrer gemeinsamen Betätigung mit dem Betätigungselement 214 - hier ebenfalls mechanisch fest - wirkverbunden sind. Zur Aufnahme der beiden Anordnungen 16.1 und 16.2 weist das Gehäuse des zweiten Ausführungsbeispiels 206 des Funktasters zusätzlich zu der ersten Einlage 27.1 eine zweite Einlage 27.2 auf, so dass die ortsfesten ersten Permanentmagnete 18 und die elektrischen Spulen 17 der beiden Anordnungen 16.1, 16.2 alternierend in den Ringkammern 28, 29 und die mit dem Betätigungselement 214 wirkverbundenen beweglichen zweiten Permanentmagnete 19 in der zentralen Aufnahmekammer 230 angeordnet sind.

Selbstverständlich können zusätzlich zu den beiden Anordnungen 16.1, 16.2 auch noch weitere derartige Anordnungen zur Umwandlung mechanischer in elektrische Energie vorgesehen sein. Die Auswahl der Anzahl dieser Anordnungen wird durch den modularen Aufbau des Gehäuses unterstützt.

Die Spulen 17 der Energiewandler 113; 213, die elektrische Energiequellen (Spannungsquellen) bilden, sind über elektrische Verbindungen 23.1, 23.2 mit dem Funksender 15 verbunden. Bei mehreren Anordnungen zur Umwandlung mechanischer in elektrische Energie (vgl. Figur 3) können die Spulen 17 in Reihe zu einer einzigen Spannungsquelle zusammengeschaltet sein.

Die Funksender 15 der beiden in den Figuren 2 und 3 gezeigten Funktaster sind jeweils zwischen dem Deckel 26 und der dem Deckel gegenüberstehenden Einlage 27.1 bzw. 27.2 angeordnet und somit baulich mit dem Energiewandler 113; 213 verbundenen.

Der Funktaster 106; 206 gibt einen weichenunabhängigen Weichenstellbefehl aus, wobei das Umstellen der Weichen beispielsweise nach einem der in den Druckschriften DE 10 2007 001 478 A1, DE 10 2007 003 630 A1 oder DE 10 2007 003 637 A1 beschriebenen Verfahren erfolgen kann.

In hier nicht weiter dargestellter Weise könnte der Funksender 15 jedoch auch so ausgestaltet sein, dass er an unterschiedliche funkgesteuerter Geräte unterschiedlich codierte Funksignale aussendet. Als Codiereinrichtung zur Codierung der Funksignale könnte das Betätigungselement 114; 214 dienen. So könnten beispielsweise über verschiedene Drehstellungen des Betätigungselementes 114; 214 verschiedene Codes einstellbar sein. Durch eine Drehbewegung des Betätigungselementes 114; 214 könnte beispielsweise die Nummer einer der Weichen 3a, 3b oder die Nummer eines Fahrweges angewählt werden. Nach Betätigung des Funktasters würde dann der Funksender 15 den Weichenstellbefehl zusammen mit der angewählten Nummer aussenden.

Zusammenfassend sei hier auf folgende Vorteile der Erfindung hingewiesen:
- Mit dem erfindungsgemäßen Energiewandler 113; 213 ausgestattete Funktaster 106; 206 sind wie bisher bekannte Schlagtaster an einem Mast 9 einer vorgezogenen Bedienstelle 10a.1, 10a.2, 10a.3, 10b.1, 10b.2, 10b.3 montierbar. Sie bieten dabei gegenüber den bisher bekannten Schlagtastern den Vorteil, dass sie aufgrund ihrer energieautarken Gestaltung wesentlich einfacher und damit kostengünstiger zu warten sind. Dies erhöht ihre Akzeptanz bei Betreibern derartiger vorgezogener Bedienstellen.
- Der interne Aufbau der erfindungsgemäßen Energiewandler 113; 213 und der mit erfindungsgemäßen Energiewandlern ausgestatteten erfindungsgemäßen Funktaster 106; 206 ist insgesamt sehr einfach und robust, da er keine Rückhaltefedern und keine Auslösemechanismen, die die Freigabe derartiger Rückhaltefedern bewirken, aufweist.
- Schienenfahrzeuge 1, die einen mit elektrisch ortsgestellten Weichen 3a, 3b versehenen Abschnitt eines schienengebundenen Verkehrsweges 2 nutzen, können einen mit dem erfindungsgemäßen Energiewandler 106; 206 ausgestatteten Funktaster insbesondere auch lose im Schienenfahrzeug 1 mit führen, so dass auf an Masten 9 befestigte Funktaster verzichtet werden kann. Dadurch können auch die Masten 9 selbst eingespart werden.
- Bei einer Codierung der Funksignale können - insbesondere aus dem fahrenden Schienenfahrzeug 1 heraus - unterschiedliche der Weichen 3a, 3b bzw. unterschiedliche Fahrwege eindeutig eingestellt werden.

Versuche haben ergeben, dass mit dem in seinem Aufbau sehr einfach gehalten Energiewandler 106; 206 die Energie erzeugt werden kann, die für die Übertragung der Funksignale (der Weichenstellbefehle) erforderlich ist.

## Patentansprüche

1. Energiewandler (113; 213)
- mit zumindest einer Anordnung (16.1) zur Umwandlung mechanischer in elektrische Energie, die eine elektrische Spule (17), einen in Bezug auf die Spule ortsfest gehaltenen ersten Permanentmagneten (18) und einen relativ zur Spule (17) beweglichen zweiten Permanentmagneten (19) aufweist, bei der eine durch Bewegen des zweiten Permanentmagneten (19) bewirkte Änderung des magnetischen Flusses einen elektrischen Strom in der Spule (17) induziert und bei der der erste Permanentmagnet (18) den zweiten Permanentmagneten (19) durch magnetische Haltekräfte in einer Ruheposition hält, und
- mit einem Betätigungselement (114; 214), das mit dem zweiten Permanentmagneten (19) wirkverbunden ist,
- bei dem die beiden Permanentmagnete (18, 19) sich in Richtung der Bewegungsbahn (24) des beweglichen zweiten Permanentmagneten (19) erstreckende, einander gegenüberstehende Halteflächen (21a, 21b, 22a, 22b) aufweisen, zwischen denen die magnetischen Haltekräfte wirken
**gekennzeichnet, durch**
- ein Gehäuse mit einer ersten Einlage (27.1), die mit Trennwänden versehen ist und die zwei in Schichten übereinander angeordnete Ringkammern (28, 29) und einen ersten Abschnitt einer konzentrisch zu den Ringkammern (28, 29) angeordeten zentralen Aufnahmekammer (130; 230) bildet,
- wobei der ortsfeste erste Permanentmagnet (18) in der oberen (28) der beiden Ringkammern, die elektrische Spule (17) in der darunter liegenden (29) der Ringkammern und der mit dem Betätigungselement (114; 214) wirkverbundene bewegliche zweite Permanentmagnet (19) in der zentralen Aufnahmekammer (130; 230) angeordnet ist, und
- wobei der zweite Permanentmagnet bei Betätigung des Betätigungselementes **durch** die Wicklung der Spule hindurch bewegbar ist.

2. Energiewandler (113; 213) nach Anspruch 1,
**dadurch gekennzeichnet, dass** der ortsfest gehaltenen erste Permanentmagnet (18) und die elektrische Spule (17) in Richtung der Bewegungsbahn (24) des beweglichen zweiten Permanentmagneten (19) in unterschiedlichen Ebenen hintereinander angeordnet sind.

3. Energiewandler (113; 213) nach einem der Ansprüche 1 oder 2,
**dadurch gekennzeichnet, dass** der ortsfest gehaltene erste Permanentmagnet (18) aus zwei Teilstücken (18a, 18b) besteht, die in der Ruheposition in Bezug auf den beweglichen zweiten Permanentmagneten (19) einander diametral gegenüberliegend angeordnet sind.

4. Energiewandler (213) nach einem der Ansprüche 1 bis 3,
**dadurch gekennzeichnet,**
- **dass** zumindest zwei der Anordnungen (16.1, 16.2) zur Umwandlung mechanischer in elektrische Energie derart angeordnet sind, dass die Bewegungsbahnen (24) ihrer beweglichen zweiten Permanentmagnete (19) fluchtend hintereinander verlaufen und
- **dass** die beweglichen zweiten Permanentmagnete (19) der zumindest zwei Anordnungen (16.1, 16.2) zur Umwandlung mechanischer in elektrische Energie zu ihrer gemeinsamen Betätigung mit dem Betätigungselement (214) wirkverbunden sind.

5. Energiewandler (113; 213) nach Anspruch 4,
**dadurch gekennzeichnet, dass**
das Gehäuse eine zweite Einlage (27.2) aufweist, wobei die ortsfesten ersten Permanentmagnete (18) und die elektrischen Spulen (17) der beiden Anordnungen (16.1, 16.2) alternierend in den Ringkammern (28, 29) und die mit dem Betätigungselement (114; 214) wirkverbundenen beweglichen zweiten permanentmagnete (19) in der zentralen Aufnahmekammer (130; 230) angeordnet sind.

6. Energiewandler (113; 213) nach einem der Ansprüche 1 bis 5,
**gekennzeichnet, durch**
die zentrale Aufnahmekammer (30) Führungsflächen (131, 132; 231, 232) für die beweglichen zweiten Permanentmagnete (19) und/oder für das Betätigungselement (114; 214) bilden.

7. Funktaster (6; 106; 206) mit einem Energiewandler (113; 213) nach einem der Ansprüche 1 bis 6,
**dadurch gekennzeichnet, dass**
die Spulen (17) elektrische Energiequellen für zumindest einen mit dem Energiewandler (113; 213) baulich verbundenen Funksender (15) bilden,
wobei der Funksender (15) zur Bedienung zumindest eines funkgesteuerten Gerätes, insbesondere zumindest einer funkgesteuerten Weichensteuerung (5a, 5b), zum Aussenden eines Funksignals geeignet ausgebildet ist.

8. Funktaster (6; 106; 206) nach Anspruch 7,
**dadurch gekennzeichnet, dass**
der Funksender (15) zur Bedienung mehrerer funkgesteuerter Geräte zum Aussenden codierter Funksignale geeignet ausgebildet ist, wobei die Codierung der Funksignale mittels einer Codiereinrichtung erfolgt.

9. Funktaster (6; 106; 206) nach Anspruch 8,
**dadurch gekennzeichnet, dass**
das Betätigungselement (114; 214) die Codiereinrichtung bildet, wobei über verschiedene Drehstellungen des Betätigungselementes (114; 214) verschiedene Code einstellbar sind.

10. Anordnung (4) zum Stellen zumindest einer elektrisch ortsgestellten Weiche (2a, 2b) eines schienengebundenen Verkehrsweges (2) mit zumindest einem Funktaster (6; 106; 206) nach einem der Ansprüche 7-9,
**dadurch gekennzeichnet, dass**
der Funktaster (6; 106; 206) als Schlagtaster an einem sich außerhalb des Lichtraumprofils des schienengebundenen Verkehrsweges (2) befindlichen Mast (9) und/oder in oder an einem sich der Weiche (2a, 2b) nähernden Schienenfahrzeug (1) angeordnet ist,
wobei das Betätigungselement (114; 214) eine Schlagtaste ist.

## Claims

1. Energy converter (113; 213)
- having at least one arrangement (16.1) for converting mechanical energy into electrical energy, which has an electrical coil (17), a first permanent magnet (18) which is held in a fixed manner in relation to the coil and a second permanent magnet (19) which is movable relative to the coil (17), wherein a change in the magnetic flux caused by movement of the second permanent magnet (19) induces an electrical current in the coil (17) and wherein the first permanent magnet (18) holds the second permanent magnet (19) in an idle position by magnetic holding forces, and
- having an actuation element (114; 214) which is functionally connected to the second permanent magnet (19),
- wherein the two permanent magnets (18, 19) have mutually opposite holding surfaces (21a, 21b, 22a, 22b) which extend in the direction of the trajectory (24) of the movable second permanent magnet (19) and between which the magnetic holding forces act,
**characterized by**
- a housing having a first inlay (27.1) which is provided with dividing walls and which forms two annular chambers (28, 29) arranged in layers one above the other and a first section of a central receiving chamber (130; 230) arranged concentrically to the annular chambers (28, 29),
- wherein the fixed first permanent magnet (18) is arranged in the upper (28) of the two annular chambers, the electric coil (17) is arranged in the annular chamber lying below (29) this and the movable second permanent magnet (19) functionally connected to the actuation element (114; 214) is arranged in the central receiving chamber (130; 230), and
- wherein the second permanent magnet can be moved through the winding of the coil on actuation of the actuation element.

2. Energy converter (113; 213) according to claim 1,
**characterized in that**
the first permanent magnet (18) held in a fixed manner and the electrical coil (17) are arranged one after the other in different planes in the direction of the trajectory (24) of the movable second permanent magnet (19).

3. Energy converter (113; 213) according to one of claims 1 or 2,
**characterized in that**
the first permanent magnet (18) held in a fixed manner consists of two sections (18a, 18b) which in the idle position are arranged diametrically opposite one another in relation to the movable second permanent magnet (19).

4. Energy converter (213) according to one of claims 1 to 3,
**characterized in that**
- at least two of the arrangements (16.1, 16.2) for converting mechanical energy into electrical energy are arranged such that the trajectories (24) of their movable second permanent magnets (19) run aligned behind one another and
- the movable second permanent magnets (19) of the at least two arrangements (16.1, 16.2) for converting mechanical energy into electrical energy are functionally connected to the actuation element (214) for their joint actuation.

5. Energy converter (113; 213) according to claim 4,
**characterized in that**
the housing has a second inlay (27.2), wherein the fixed first permanent magnets (18) and the electrical coils (17) of the two arrangements (16.1, 16.2) are arranged in an alternating manner in the annular chambers (28, 29) and the movable second permanent magnets (19) which are functionally connected to the actuation element (114; 214) are arranged in the central receiving chamber (130; 230).

6. Energy converter (113; 213) according to one of claims 1 to 5,
**characterized by**
the central receiving chamber (30) forming guide surfaces (131, 132; 231, 232) for the movable second permanent magnets (19) and/or for the actuation element (114; 214).

7. Radio button (6; 106; 206) with an energy converter (113; 213) according to one of claims 1 to 6,
**characterized in that**
the coils (17) form electrical energy sources for at least one radio transmitter (15) structurally connected to the energy converter (113; 213),
wherein the radio transmitter (15) is designed to be suitable for the operation at least of one radio-controlled device, in particular at least one radio-controlled point controller (5a, 5b), and for transmitting a radio signal.

8. Radio button (6; 106; 206) according to claim 7,
**characterized in that**
the radio transmitter (15) is designed to be suitable for operating a plurality of radio-controlled devices for transmitting encoded radio signals, wherein the encoding of the radio signals takes place by means of an encoding device.

9. Radio button (6; 106; 206) according to claim 8,
**characterized in that**
the actuation element (114; 214) forms the encoding device, wherein different codes can be set by way of different rotational positions of the actuation element (114; 214).

10. Arrangement (4) for setting at least one locally controlled electrically operated point (2a, 2b) of a rail-bound traffic route (2) with at least one radio button (6; 106; 206) according to one of claims 7-9,
**characterized in that**
the radio button (6; 106; 206) is arranged as a post-mounted button on a mast (9) located outside the clearance gauge of the rail-bound traffic route (2) and/or in or on a rail vehicle (1) approaching the point (2a, 2b),
wherein the actuation element (114; 214) is a post-mounted button.

## Revendications

1. Convertisseur ( 113; 213 ) d'énergie
- comprenant au moins un agencement ( 16.1 ) de transformation d'énergie mécanique en énergie électrique, qui a une bobine ( 17 ) électrique, un premier aimant ( 18 ) permanent, retenu à poste fixe par rapport à la bobine, et un deuxième aimant ( 19 ) permanent, mobile par rapport à la bobine ( 17 ), dans lequel une variation du flux magnétique, provoquée par le déplacement du deuxième aimant ( 19 ) permanent, induit un courant électrique dans la bobine ( 17 ) et dans lequel le premier aimant ( 18 ) permanent maintient le deuxième aimant ( 19 ) permanent dans une position de repos par des forces magnétiques de maintien et
- comprenant un élément ( 114; 214 ) d'actionnement, qui est en liaison d'action avec le deuxième aimant ( 19 ) permanent,
- dans lequel les deux aimants ( 18, 19 ) permanents ont des surfaces ( 21a, 21b, 22a, 22b ), qui s'étendent dans la direction de la trajectoire ( 24 ) de déplacement du deuxième aimant ( 19 ) permanent mobile, qui sont opposées l'une à l'autre et entre lesquelles agissent les forces magnétiques de maintien,
**caractérisé par**
- un boîtier ayant une première insertion ( 27.1 ), qui est pourvue de cloisons et qui forme deux chambres ( 28, 29 ) annulaires disposées l'une au-dessus de l'autre et une première partie d'une chambre ( 130; 230 ) de réception centrale disposée concentriquement aux chambres ( 28, 29 ) annulaires,
- dans lequel le premier aimant ( 18 ) permanent à poste fixe est disposé dans la chambre ( 28 ) supérieure des deux chambres annulaires, la bobine ( 17 ) électrique dans celle ( 29 ) se trouvant en dessous des chambres annulaires et le deuxième aimant ( 19 ) permanent mobile en liaison d'action avec l'élément ( 114; 214 ) d'actionnement dans la chambre ( 130; 230 ) centrale de réception et
- dans lequel le deuxième aimant permanent peut, si on actionne l'élément d'actionnement, se déplacer dans l'enroulement de la bobine.

2. Convertisseur ( 113; 213 ) d'énergie suivant la revendication 1,
**caractérisé en ce que**
le premier aimant ( 18 ) permanent retenu à poste fixe et la bobine ( 17 ) électrique sont disposés l'un derrière l'autre dans la direction de la trajectoire ( 24 ) de déplacement du deuxième aimant ( 19 ) permanent mobile dans des plans différents.

3. Convertisseur ( 113; 213 ) d'énergie suivant l'une des revendications 1 ou 2,
**caractérisé en ce que**
le premier aimant ( 18 ) permanent retenu à poste fixe est constitué de deux sous-pièces ( 18a, 18b ), qui sont, dans la position de repos, opposées diamétralement l'une à l'autre par rapport au deuxième aimant ( 19 ) permanent mobile.

4. Convertisseur ( 113; 213 ) d'énergie suivant l'une des revendications 1 à 3,
**caractérisé**
- **en ce qu'**au moins deux des agencements ( 16.1, 16.2 ) sont disposés pour transformer de l'énergie mécanique en énergie électrique, de manière à ce que les trajectoires ( 24 ) de déplacement de leurs deuxièmes aimants ( 19 ) permanents mobiles s'étendent l'une derrière l'autre en alignement et
- **en ce que** les deuxièmes aimants ( 19 ) permanents mobiles des au moins deux agencements ( 16.1, 16.2 ) de transformation d'énergie mécanique en énergie électrique soient, pour leur actionnement commun, en relation d'action avec l'élément ( 214 ) d'actionnement.

5. Convertisseur ( 113; 213 ) d'énergie suivant la revendication 4,
**caractérisé en ce que**
le boîtier a une deuxième insertion ( 27.2 ), les premiers aimants ( 18 ) permanents à poste fixe et les bobines ( 17 ) électriques des deux agencements ( 16.1, 16.2 ) étant disposés en alternance dans les chambres ( 28, 29 ) annulaires et les deuxièmes aimants ( 19 ) permanents mobiles en liaison d'action avec l'élément ( 114; 214 ) d'actionnement dans la chambre ( 130; 230 ) centrale de réception.

6. Convertisseur ( 113; 213 ) d'énergie suivant l'une des revendications 1 à 5,
**caractérisé en ce que**
la chambre ( 30 ) centrale de réception forme des surfaces ( 131, 132; 231; 232 ) de guidage des deux aimants ( 19 ) permanents mobiles et/ou de l'élément ( 14; 214 ) d'actionnement.

7. Actionneur ( 6; 106; 206 ) radio ayant un convertisseur ( 113; 213 ) d'énergie suivant l'une des revendications 1 à 6,
**caractérisé en ce que**
les bobines ( 17 ) forment des sources d'énergie électrique pour au moins un émetteur ( 15 ) radio relié en construction au convertisseur ( 113; 213 ) d'énergie,
dans lequel l'actionneur ( 15 ) radio est, pour commander au moins un appareil commandé par radio, notamment au moins une commande ( 5a, 5b ) d'aiguillage commandée par radio, constitué de manière appropriée à l'émission d'un signal radio.

8. Actionneur ( 6; 106; 206 ) radio suivant la revendication 7, **caractérisé en ce que**
l'émetteur ( 15 ) radio est, pour la commande de plusieurs appareils commandés par radio, constitué de manière appropriée à l'émission de signaux radio codés, le codage des signaux radio s'effectuant au moyen d'un dispositif de codage.

9. Actionneur ( 6; 106; 206 ) radio suivant la revendication 8,
**caractérisé en ce que**
l'élément ( 114; 214 ) d'actionnement forme le dispositif de codage, dans lequel divers codes sont réglables par diverses positions de rotation de l'élément ( 114; 214 ) d'actionnement.

10. Agencement ( 4 ) pour enclencher au moins un aiguillage ( 2a, 2b ) mis en position électriquement d'une voie ( 2 ) de circulation liée à un rail, ayant au moins un actionneur ( 6; 106; 206 ) radio suivant l'une de revendications 7 à 9,
**caractérisé en ce que**
l'actionneur ( 6; 106; 206 ) radio est disposé sous la forme d'un actionneur à percussion sur un mât ( 9 ) se trouvant à l'extérieur du gabarit de la voie ( 2 ) de circulation liée au rail et/ou dans ou sur un véhicule ( 1 ) ferroviaire se rapprochant de l'aiguillage ( 2a, 2b ),
l'élément ( 114; 214 ) d'actionnement étant un actionneur à percussion.
